# EUROPEAN PATENT APPLICATION

(11) **EP 3 255 313 A1**
(43) Date of publication of application: **13.12.2017**
(21) Application number: 16193153.0
(22) Date of filing: 10.10.2016
(51) Int. Cl.: F16H 48/285

(54) **ALL-TERRAIN VEHICLE AND TRANSMISSION MECHANISM THEREOF**

(30) Priority: 08.06.2016 CN 201620550702 U
(71) Applicant: Zhejiang CFMOTO Power Co., Ltd., Hangzhou, Zhejiang 311100 (CN)
(72) Inventor: LAI, Minjie, Hangzhou, Zhejiang 311100 (CN); YUAN, Zhangping, Hangzhou, Zhejiang 311100 (CN); CHENG, Fuying, Hangzhou, Zhejiang 311100 (CN); KUANG, Zhenxiang, Hangzhou, Zhejiang 311100 (CN); CHEN, Zhiyong, Hangzhou, Zhejiang 311100 (CN)
(74) Representative: Feltrinelli, Secondo Andrea

(57) **Abstract**

An all-terrain vehicle and a transmission mechanism thereof are provided. The transmission mechanism includes an independent suspension axle, and the axle includes a left half-axle and a right half-axle. A mechanical locking spiral differential device is further provided at a joint of the left half-axle and the right half-axle, which makes the left half-axle and the right half-axle to be in a differential state when the vehicle runs normally, and to be in a differential locked state automatically when the vehicle slips on one side. In this way, the differential device is in the differential state when the vehicle is in normal running states, such as running in a straight line, turning etc., to allow the wheels to perform unequal distance running by pure rolling as much as possible and prevent the vehicle from side tipping and side slipping and tire scuffing. The differential device is in the differential locked state when a wheel at one side slips, to allow the torque on one side to be transferred to the torque on another side, to enable the all-terrain vehicle to get rid of a stuck condition.

## Description

### FIELD

This application relates to the technical field of vehicles, and particularly to an all-terrain vehicle and a transmission mechanism thereof.

### BACKGROUND

An all-terrain vehicle refers to a vehicle capable of running on any terrains and running freely on a terrain where an ordinary vehicle is difficultly driven. The all-terrain vehicle is commonly known as an ATV (all-terrain vehicle) in China. The all-terrain vehicle has a structure which is very similar to a motorcycle, and many components thereof can be used interchangeably with those of a motorcycle, thus the all-terrain vehicle is also called as quad bike. Such kind of vehicle has a variety of uses, and is not restricted by road conditions, thus is widely used in North America and Western Europe, and the used range shows an increasing trend year by year.

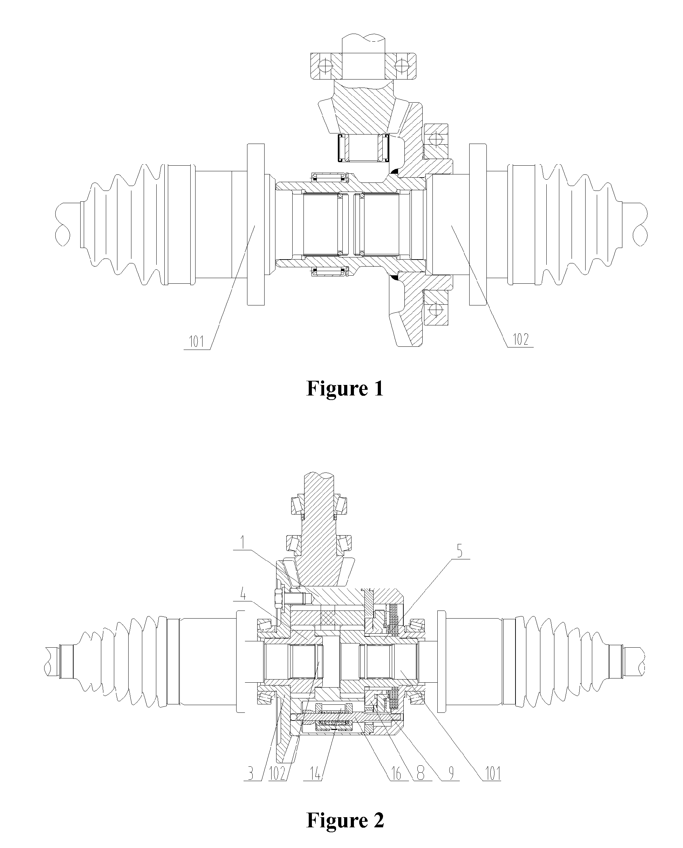

Reference is made to Figure 1, which is a schematic view showing the structure of an axle of an all-terrain vehicle in the conventional technology.

As shown in Figure 1, in the conventional technology, an axle of the all-terrain vehicle in the conventional technology includes a left half-axle and a right half-axle, and the axle is not provided with any differential devices. Thus, a force outputted by an engine to the half-axles is equally distributed to the half-axles at the two sides, to allow a left wheel and a right wheel respectively connected to the left half-axle and the right half-axle to run at the same speed.

When the all-terrain vehicle turns, a running distance of a wheel at the outer side is longer than a running distance of a wheel at the inner side; or when the all-terrain vehicle runs in a straight line on an uneven road, lengths of running curves of the wheels at the two sides are also different; or even if the road is very flat and straight, due to the size error of tires in manufacturing, different degrees of wear, different loads born, or different inflation pressures of the tires, rolling radii of the tires are virtually impossible to be completely equal, and if the speeds of the wheels at the two sides are equal, the phenomenon that the wheel slips while rolling would inevitably occur, i.e., the tire at one side slips with respect to the tire at another side, which accelerates tire wear, and reduces the transmission efficiency.

In view of this, it is urgent to optimize the design of the axle of the all-terrain vehicle in the conventional technology, to enable the axle of the all-terrain vehicle to allow the half-axles at the two sides to rotate at different speeds while transmitting power to the half-axles at the two sides, and to enable the wheels at the two sides to perform unequal distance running in pure rolling form as much as possible and prevent the wheel at one side from slipping.

### SUMMARY

An object of the present application is to provide a transmission mechanism of an all-terrain vehicle, to enable the transmission mechanism of the all-terrain vehicle to allow half-axles at two sides to rotate at different speeds while transmitting power to the half-axles at the two sides, to enable wheels at the two sides to perform unequal distance running in pure rolling form as much as possible and reduce rubbing of tires against the ground, and prevent the wheel at one side from slipping. Furthermore, another object of the present application is to provide an all-terrain vehicle using the above transmission mechanism.

To address the above technical solutions, a transmission mechanism of an all-terrain vehicle is provided according to the present application, which includes an independent suspension axle, and the axle includes a left half-axle and a right half-axle, a mechanical locking spiral differential device is further provided at a joint of the left half-axle and the right half-axle, to make the left half-axle and the right half-axle to be in a differential state when the vehicle runs normally, and to make the left half-axle and the right half-axle to be in a differential locked state automatically when the vehicle slips on one side.

In this way, the differential device is in the differential state when the vehicle is in normal running states, such as running in a straight line, turning etc., to allow the wheels to perform unequal distance running by pure rolling as much as possible and prevent the vehicle from side tipping and side slipping. The differential device is in the differential locked state when the wheel at one side slips, to allow the torque on one side to be transferred to the torque on another side, thus allowing the all-terrain vehicle to get rid of a stuck condition.

Preferably, the mechanical locking spiral differential device includes a casing, a left end cover and a right end cover;
a left half-axle gear is provided between a left side of the casing and the left end cover, a right half-axle gear is provided between a right side of the casing and the right end cover, a left planetary gear is engaged with the left half-axle gear at an outer side, and a right planetary gear is engaged with the right half-axle gear at an outer side, and the left planetary gear is engaged with the right half-axle gear; and
the left half-axle gear, the right half-axle gear, the left planetary gear and the right planetary gear are all spiral gears.

Preferably, the left end cover is formed integrally by an end cover and a driven bevel gear.

Preferably, a number of the left planetary gear and a number of the right planetary gear are both three, and the three left planetary gears and the three right planetary gears are nonuniformly distributed in a circumferential direction respectively, and the three left planetary gears are respectively engaged with the three right planetary gears in pairs.

Preferably, the mechanical locking spiral differential device is further provided with a differential locking mechanism and a locking switch mechanism;
when a wheel at one side of the vehicle spins, and a rotation speed difference between the wheels at the two sides reaches a preset value, the locking switch mechanism triggers the differential locking mechanism to lock the differential device; and when the vehicle speed is above the preset value, the locking switch mechanism releases the differential locking mechanism to unlock the differential device.

Preferably, the locking mechanism includes an inner cam in connection with the right half-axle gear, and an outer cam which is in cooperation with the inner cam and movable along an axial direction of the axle,
a locking friction plate assembly is provided between the outer cam and the right end cover; the differential locking assembly further includes a centrifugal gear shaft arranged on the casing and engaged with the outer cam;
the locking switch mechanism includes two centrifugal blocks arranged on two sides of the centrifugal gear shaft, and a rotatable swinging block in cooperation with the centrifugal blocks in position;
when a wheel at one side spins, and a rotation speed difference between the wheels at two sides reaches a preset value, the centrifugal blocks are swung out, and released from the centrifugal gear shaft, and one of the centrifugal blocks is engaged with the swinging block, to brake the centrifugal gear shaft; and
when the vehicle speed is above the preset value, the swinging block is swung out, and the two centrifugal blocks are reset to tightly hold the centrifugal gear shaft, to enable the centrifugal gear shaft to rotate along with the casing.

An all-terrain vehicle is further provided according to the present application, which includes an engine and a transmission mechanism connected to the engine, and the transmission mechanism adopts the transmission mechanism described above.

Since the transmission mechanism has the above technical effects, the all-terrain vehicle including the transmission mechanism should also have the same technical effects, which are not described here.

### BRIEF DESCRIPTION OF THE DRAWINGS

Figure 1 is a schematic view showing the structure of an axle of an all-terrain vehicle in the conventional technology;
Figure 2 is a schematic view showing the structure of an embodiment of a transmission mechanism according to the present application;
Figure 3 is an exploded view showing a mechanical locking spiral gear differential device in Figure 2;
Figure 4 is a view showing the state that a locking mechanism in Figure 3 is triggered by a locking switch mechanism; and
Figure 5 is a view showing the state that the locking mechanism in Figure 3 is released by the locking switch mechanism.

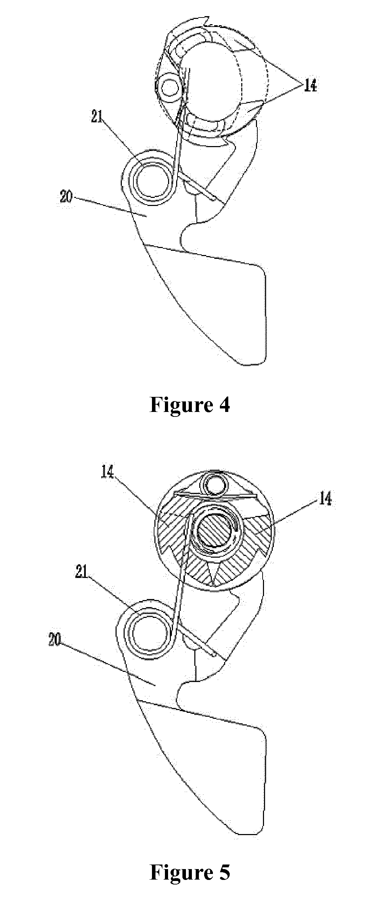

**Reference numerals in Figures 1 to 5:**

| | | | |
|---|---|---|---|
| 1 | casing, | 2 | connecting plate, |
| 3 | left end cover, | 4 | left half-axle gear, |
| 5 | right half-axle gear, | 6 | left planetary gear, |
| 7 | right planetary gear, | 8 | inner cam, |
| 9 | outer cam, | 10 | internally-toothed friction plate, |
| 11 | smooth friction plate, | 12 | externally-toothed friction plate, |
| 13 | centrifugal end cover, | 14 | centrifugal block, |
| 15 | centrifugal torsion spring, | 16 | centrifugal gear shaft, |
| 17 | pin, | 18 | wedge sleeve, |
| 19 | compression spring, | 20 | swinging block, |
| 21 | swinging block spring, | 22 | swinging block shaft, |
| 23 | retainer ring | 24 | right end cover, |
| 25 | wave-shaped pad, | 26 | bolt, |
| 101 | left half-axle, and | 102 | right half-axle. |

### DETAILED DESCRIPTION

An aspect of the present application is to provide a transmission mechanism of an all-terrain vehicle, to enable the transmission mechanism of the all-terrain vehicle to allow half-axles at two sides to rotate at different speeds while transmitting power to the half-axles at the two sides, to enable wheels at the two sides to perform unequal distance running in pure rolling form as much as possible and reduce rubbing of a tire against the ground, and prevent the wheel at one side from slipping. Furthermore, another aspect of the present application is to provide an all-terrain vehicle using the above transmission mechanism.

For those skilled in the art to better understand technical solutions of the present application, the present application is further described in detail hereinafter in conjunction with the drawings and embodiments.

Reference is made to Figure 2, which is a schematic view showing the structure of an embodiment of a transmission mechanism according to the present application.

In an embodiment, as shown in Figure 2, a transmission mechanism of an all-terrain vehicle is provided according to the present application, which includes an axle, and the axle includes a left half-axle 101 and a right half-axle 102. A mechanical locking spiral differential device is further provided at a joint of the left half-axle 101 and the right half-axle 102 to allow the left half-axle 101 and the right half-axle 102 to be in a differential state when the vehicle runs normally, and to allow the left half-axle 101 and the right half-axle 102 to be in a differential locked state automatically when the wheel at one side slips.

In this way, the differential device is in the differential state when the vehicle is in normal running states, such as running in a straight line, turning etc., to allow the wheels to perform unequal distance running by pure rolling as much as possible and prevent the vehicle from side tipping and side slipping. The differential device is in the differential locked state when a wheel at one side slips, to allow the torque on one side to be transferred to the torque on another side, which allows the all-terrain vehicle to get rid of the stuck condition.

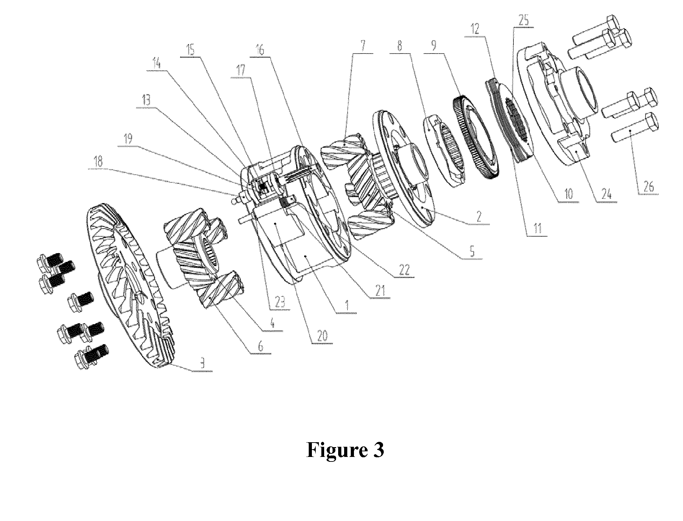

In a specific solution, as shown in Figure 3, which is an exploded view showing a mechanical locking spiral gear differential device in Figure 2, the mechanical locking spiral differential device includes a casing 1, a left end cover 3 and a right end cover 24. A left half-axle gear 4 is provided between a left side of the casing 1 and the left end cover 3, a right half-axle gear 5 is provided between a right side of the casing 1 and the right end cover 24. A left planetary gear 6 is engaged with the left half-axle gear 4 at an outer side of the left half-axle gear 4, a right planetary gear 7 is engaged with the right half-axle gear 5 at an outer side of the right half-axle gear 5, and the left planetary gear 6 is engaged with the right half-axle gear 5. The left half-axle gear 4, the right half-axle gear 5, the left planetary gear 6 and the right planetary gear 7 are all spiral gears.

Furthermore, as shown in Figure 3, the above left end cover may be formed integrally by an end cover and a driven bevel gear. Compared with the conventional technology, such a structure can improve an integration degree of the mechanical locking spiral differential device, reduce the mounting or detaching procedures, and prevent the operation stability of the differential device from being reduced due to the mounting error.

A number of the above left planetary gear 6 and a number of the right planetary gear 7 may be both three. The three left planetary gears 6 and the three right planetary gears 7 are nonuniformly distributed in a circumferential direction respectively. The three left planetary gears 6 are respectively engaged with the three right planetary gears 7 in pairs. In this way, gears of the spiral differential device can be ensured to engage stably, thus allowing the transmission mechanism to transmit stably, and a manufacturing cost thereof is not high. Apparently, the number of the above left planetary gears 6 and the number of the above right planetary gears 7 are not limited to three, and may also be four or more, however the cost of manufacturing is slightly high.

When the vehicle runs in a straight line, the left planetary gears 6 and the right planetary gears 7 in the casing 1 rotate along with the casing 1 without rotating around their own axis, which respectively drive the left half-axle gear 4 and the right half-axle 5 to rotate along with the casing 1, thus driving the vehicle to move forward or backward.

When the vehicle turns left, a rotation speed of the right half-axle gear 5 exceeds that of the casing 1, the right planetary gears 7 engaged with the right half-axle gear 5 rotate reversely around their own axis while rotating along with the casing 1, and drive the left planetary gears 6 engaged with the right planetary gears 7 in pairs to rotate forwardly around their own axis while rotating along with the casing 1, the forward self-rotation of the left planetary gears 6 allows the rotation speed of the left half-axle gear 4 to be lower than the rotation speed of the casing 1, thus achieving turning of the vehicle. When the vehicle turns right, the working process is opposite to the above working process, which is not described here in further details.

When the vehicle slips on a left side, the rotation speed of the left half-axle gear 4 is obviously higher than that of the casing 1 of the differential device, the left planetary gears 6 engaged with the left half-axle gear 4 may rotate around their own axis reversely at a high speed, and meanwhile drive the three right planetary gears 7 engaged with the left planetary gears 6 in pairs to rotate around their own axis forwardly about the right half-axle gear 5. Since an engaged gear pair having a large spiral angle has a large internal friction force, large pressure angles of the gears also force the planetary gears to press against the end cover during engagement of the gears, and the engagement of the spiral gears may further generate a large axial force, the gears in a gear train may each generate an axial force, which presses against the driven bevel gear, the casing 1, or the right end cover 24. An resultant force of these forces may restrict the whole planetary gear train from rotating around its own axis, therefore the rotation speed of the left half-axle gear 4 being significantly higher than that of the casing 1 of the differential device is restricted, and the torque is transferred to the right half-axle gear 5, thus achieving the object of restricting the slipping of the wheel at the left side and the object of transferring the torque to the wheel at the right side, thereby achieving the function of slip restriction. When the vehicle slips on the right side, the working process is opposite to the above working process, which is not descried herein in further details.

It can be known from the above working process that, with the above spiral gear differential device, and by reasonably configuring the planetary gear train, not only the differential running during the turning can be ensured, but also the torque on one side can be transferred to another side when slip occurs at one side, thus the function of slip restriction is achieved.

The road conditions for running of the all-terrain vehicle are comparatively complicated, however, by the adopting the above spiral differential device, the all-terrain vehicle is allowed to meet the security requirement for turning, and side tipping, side slipping, and tire scuffing are not easily occur to the all-terrain vehicle, thus ensuring the rolling drive of the tire, and greatly improving the transmission efficiency.

In another embodiment, the above mechanical locking spiral differential device is further provided with a differential locking mechanism and a locking switch mechanism. When the wheel at one side spins (losing an adhesion force), and a rotation speed difference between the left half-axle 101 and the right half-axle 102 reaches a preset value, the locking switch mechanism locks the differential locking mechanism to allow the left half-axle 101 and the right half-axle 102 to be in a differential locked state. When the vehicle speed is above the preset value, the locking switch mechanism releases the locking mechanism to unlock the differential device to allow the left half-axle 101 and the right half-axle 102 to be in a differential state.

In a specific solution, the locking mechanism includes an inner cam 8 in connection with the right half-axle gear 5 by a spline, and an outer cam 9 which is in cooperation with the inner cam 8 and movable along an axial direction of the axle. A locking friction plate assembly is provided between the outer cam 9 and the right end cover 24, and includes an internally-toothed friction plate 10, a smooth friction plate 11, and an externally-toothed friction plate 12 arranged in order from left to right. The locking mechanism further includes a centrifugal gear shaft 16 arranged on the casing 1, and the centrifugal gear shaft 16 is engaged with the outer cam 9. The locking switch mechanism includes two centrifugal blocks 14 arranged on two sides of the centrifugal gear shaft 16, and a rotatable swinging block 20 in cooperation with the centrifugal blocks 14 in position. A return torsion spring 15 may further be arranged between the swing block 20 and the centrifugal blocks 14.

The working process when a wheel at one side loses the adhesion force thoroughly (in the case that the slip restriction function fails) is described hereinafter.

When the wheel at the right side spins, the left half-axle gear 4 is in a rest state, and the right half-axle gear 5 is in a rotating state, and generally, the rotation speed of the right half-axle gear 5 is two times higher than that of the casing 1. The right half-axle gear 5 drives the inner cam 8 and the outer cam 9 to rotate at a same speed. At the same time, the outer cam 9 drives the centrifugal gear shaft 16 to reversely rotate about its own axis. When the centrifugal gear shaft 16 reaches a preset rotation speed, the two centrifugal blocks 14 overcome an elastic force of the centrifugal torsion spring 15 and are swung off, and one of the centrifugal blocks 14 abuts against a supporting point of the swinging block 20, and is engaged with the swinging block 20, such that the centrifugal gear shaft 16 is braked, and further the outer cam 9 is driven to be braked, thus allowing the outer cam 9 to move axially rightwards along a spiral lead of the cam at an end face to press the internally-toothed friction plate 10, the smooth friction plate 11 and the externally-toothed friction plate 12 in the listed sequence till tightly press the right end cover 24. At this time, the power is transmitted to the right end cover 24 via the casing 1, and then transmitted to the friction plate assembly, and then to the right half-axle gear 5, to force the right half-axle gear 5 to reduce the rotation speed, and finally to be synchronous with the casing 1. The left planetary gears 6 and the right planetary gears 7 stop rotating about their own axis, and the left half-axle gear 4 improves the rotation speed, to be synchronous with the casing 1, to enable the wheel at the left side to get rid of the stuck condition.

When the left side wheel spins, the right half-axle gear 5 is in a rest state, the inner cam 8 connected to the right half-axle gear 5 via the spline is also in a rest state, and the outer cam 9 in cooperation with the inner cam 8 is also in a rest state. At this time, the casing 1 rotates to drive the centrifugal gear shaft 16 to rotate about the outer cam 9. Since the outer cam 9 is engaged with the centrifugal gear shaft 16, and gear speeds of the outer cam 9 and the centrifugal gear shaft 16 are large, the centrifugal gear shaft 16 rotates about its own axis forwardly at a high speed. When the centrifugal gear shaft 16 reaches the preset rotation speed, two centrifugal blocks 14 overcome an elastic force of the centrifugal torsion spring 15 and are swung off, and one of the centrifugal blocks 14 abuts against the supporting point of the swinging block 20 and is engaged with the swinging block 20, to brake the centrifugal gear shaft 16. The outer cam 9 is driven by the centrifugal gear shaft 16 to rotate along with the casing 1, and moves rightwards axially to press the internally-toothed friction plate 10, the smooth friction plate 11 and the externally-toothed friction plate 12 in the listed sequence until pressing the right end cover 24. At this time, the power is transmitted via the casing 1 to the right end cover 24, the friction assembly, the right half-axle gear 5 in the listed sequence, to force the right-half axle gear 5 to speed up, and be synchronous with the casing 1, to enable the wheel at the right side to get rid of the stuck condition.

After the above differential device is locked, when the vehicle speed is higher than a preset speed (for example, 40 kilometers per hour), the swinging block 20 overcomes the torsion force of the torsion spring 15 under the action of a centrifugal force and is swung off, and leaves the locking centrifugal blocks 14 by a certain distance, thus allowing the centrifugal blocks 14 to be reset under the action of the torsion spring 15. The centrifugal gear shaft 16 restores free movement, the outer cam 9 is reset leftwards axially and engaged with the inner cam 8, and the differential device is unlocked and waits for a next working cycle.

Thus it can be seen that, with the locking mechanism and locking switch mechanism having the above structures, the differential locked state can be achieved when the wheel at one side spins, which enables the all-terrain vehicle to get rid of stuck conditions in case of special road conditions such as mire, and recovers automatically during normal running, thus greatly improves the stability and adaptability of the all-terrain vehicle.

Furthermore, an all-terrain vehicle is further provided according to the present application, which includes an engine and a transmission mechanism connected to the engine. The transmission mechanism adopts the transmission mechanism described above.

Since the transmission mechanism has the above technical effects, the all-terrain vehicle including the transmission mechanism should also have the same technical effects, which are not described here in further details.

The all-terrain vehicle and the transmission mechanism thereof according to the present application are described in detail hereinbefore. The principle and the embodiments of the present application are illustrated herein by specific examples. The description of the above embodiments is only intended to facilitate the understanding of the method and the concept of the present application. It should be noted that, for those skilled in the art, many improvements and modifications may be made to the present application without departing from the principle of the present application, and these improvements and modifications are also deemed to fall into the protection scope of the present application defined by the claims.

## Claims

1. A transmission mechanism of an all-terrain vehicle, comprising an independent suspension axle, the axle comprising a left half-axle and a right half-axle, wherein a mechanical locking spiral differential device is further provided at a joint of the left half-axle and the right half-axle, and the mechanical locking spiral differential device makes the left half-axle and the right half-axle to be in a differential state during normal running of a vehicle, and makes the left half-axle and the right half-axle to be in a differential locked state automatically when the vehicle slips on one side.

2. The transmission mechanism according to claim 1, wherein the mechanical locking spiral differential device comprises a casing, a left end cover and a right end cover;
a left half-axle gear is provided between a left side of the casing and the left end cover, a right half-axle gear is provided between a right side of the casing and the right end cover, a left planetary gear engages with the left half-axle gear at an outer side of the left half-axle gear, a right planetary gear engages with the right half-axle gear at an outer side of the right half-axle gear, and the left planetary gear engages with the right half-axle gear; and
the left half-axle gear, the right half-axle gear, the left planetary gear and the right planetary gear are all spiral gears.

3. The transmission mechanism according to claim 2, wherein the left end cover is formed integrally by an end cover and a driven bevel gear.

4. The transmission mechanism according to claim 3, wherein a number of the left planetary gear and a number of the right planetary gear are both three, the three left planetary gears and the three right planetary gears are nonuniformly distributed in a circumferential direction respectively, and the three left planetary gears engage with the three right planetary gears in pairs respectively.

5. The transmission mechanism according to any one of claims 1 to 4, wherein the mechanical locking spiral differential device is further provided with a differential locking mechanism and a locking switch mechanism;
when a wheel at one side of the vehicle spins, and a rotation speed difference between wheels at the two sides reaches a preset value, the locking switch mechanism triggers the differential locking mechanism; and
when a vehicle speed is above the preset value, the locking switch mechanism releases the differential locking mechanism to release locking.

6. The transmission mechanism according to claim 5, wherein the differential locking mechanism comprises an inner cam in connection with the right half-axle gear, and an outer cam in cooperation with the inner cam and movable along an axial direction of the axle;
a locking friction plate assembly is provided between the outer cam and the right end cover;
the differential locking assembly further comprises a centrifugal gear shaft arranged on the casing and engaged with the outer cam;
the locking switch mechanism comprises two centrifugal blocks respectively arranged on two sides of the centrifugal gear shaft, and a rotatable swinging block in cooperation with the centrifugal blocks in position;
when the wheel at one side spins, and a rotation speed difference of the wheels at the two sides reaches a preset value, the centrifugal blocks are swung off and disengaged from the centrifugal gear shaft, and one of the centrifugal blocks is engaged with the swinging block, to brake the centrifugal gear shaft; and
when the vehicle speed is above the preset value, the swinging block is swung off, and the two centrifugal blocks are reset to tightly hold the centrifugal gear shaft, to make the centrifugal gear shaft to rotate along with the casing.

7. An all-terrain vehicle, comprising an engine and a transmission mechanism connected to the engine, wherein the transmission mechanism is the transmission mechanism according to any one of claims 1 to 6.
